# EUROPEAN PATENT APPLICATION

(11) **EP 1 925 349 A1**
(43) Date of publication of application: **28.05.2008**
(21) Application number: 06810078.3
(22) Date of filing: 13.09.2006
(51) Int. Cl.: A63F 13/12, A63F 13/00, A63F 13/10

(54) **ONLINE GAME SYSTEM**

(30) Priority: 14.09.2005 JP 2005267672
(71) Applicant: Kabushiki Kaisha Sega doing business as Sega Corporation, Tokyo 144-8531 (JP)
(72) Inventor: HATA, Shintaro, Tokyo 144-8531 (JP)
(74) Representative: Vinsome, Rex Martin
(86) International application number: PCT/JP2006/318113
(87) International publication number: WO 2007/032364

(57) **Abstract**

An online game system is a system in which plurality of players conduct a game play by accessing through a network. The online game system includes a private area control part controlling a game stage of a private area which restricts a number of players sharing a same game space; and a public area control part controlling a game stage of a public area which allows the number of players sharing the same game space greater than the private area, wherein a game is begun from a first game stage of the public area, the first game stage is transited to a second game stage of the private area, the second game stage is transited to a third game stage of the public area after the second game stage of the private area is cleared, and these transitions are repeated more than once.

## Description

### TECHNICAL FIELD

The present invention relates to an online game system in which a plurality of players access and play a game by using their personal computers or likes through a network such as the Internet.

### BACKGROUND ART

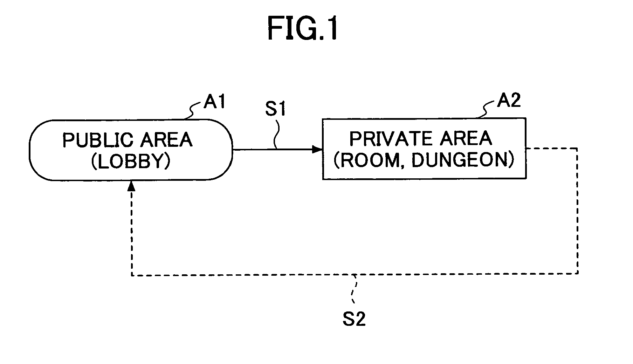

FIG. 1 is a diagram showing a transition of stages in a conventional online game such as an online game "PHANTASY STAR ONLINE^{™}" or a like presented by the applicant of the present application. In FIG. 1, first, a player searches for a person such as an opponent, a cooperator, or a like to play a game together in a virtual space provided as a public area A1, and comes in a lobby which is an area to wait for the person. Then, at a counter in the virtual space, the player creates a game field in which the player performs a mission charged on the game, for example, a private area A2 which is a virtual room including a dungeon, and comes in this room after setting a team name, a difficulty level, and a like (step S1).

Other players, who are willing to take an adventure together with this player, are allowed to attend to (burst into) the room. A plurality of players coming into the same room make a party and fight with enemy game characters by cooperating with each other. The room provided as the private area A2 includes a dungeon, and is a completed area. In general, the player plays without getting out from the room until the end of the game. In a case of playing from the beginning of the game, the player goes back to the lobby provided as the public area A1 (step S2). The room is deleted when all players get out from the room to the lobby.

On the other hand, Cross-Reference No. 1 discloses a technology which manages entering to and exiting from the vertical space on the game so as to smoothly enable the entering to the vertical space.
[Cross-Reference No.1 of Related Application]
Japanese Laid-open Patent Application No. 2003-190642

### DISCLOSURE OF THE INVENTION

As described above, there are a public area (lobby) and a private area (dungeon) in the conventional online game. The public area is simply a starting point of an adventure (game). The conventional online game is a closed game in which once an adventure has begun, only the party formed by the plurality of players is conducted.

Accordingly, the player spends much of his time for a game play in the private area. There are problems such that the player cannot sufficiently approve "sharing time and space (communication) with the plurality of players" which is a whole point of the online game.

In addition, due to a performance limitation of a system (a server, a network, and a like), the online games are broadly classified into an MMO (Massive Multiplayer Online) type which allows a large number of players to play simultaneously but is a lower action nature, and an MO (Multiplayer Online) type which restricts to a small number of players to simultaneously play but is a higher action nature.

The MMO type allows for a greater number of players sharing the same game space more than the MO type, and the main part of a game process is conducted by a server. For example, the server conducts processes concerning actions of characters (movements of the characters, attacks to other characters, usages of items, determinations of collisions with other objects in a virtual three-dimensional space, and the like). A process result is sent to a terminal through the network. Thus, a response is degraded and the action nature becomes lower. In the MO type, the main part of the game process is conducted by the terminal, so as to immediately display the process result. Thus, the response is well performed, and the action nature becomes higher.

Accordingly, there are features (drawbacks) respective to the public area and the private area in which it is required to apply the MMO type to the public area in which the large number of players exist while lowering the action nature and it is required to apply the MO type to the private area which is a high action nature while suppressing the number of players. In the conventional online game described above, the players are required to "recognize these drawbacks as rules".

The present invention is proposed in view of the above-described problems of the conventional online game system. It is a general object of the present invention to provide an online game system which can direct such as depth and achievement as experienced as the adventure by aggressively mixing and utilizing the public area in an MMO space and a private area in an MO space in the online game.

In order to solve the above-described problems, according to the present invention, as claimed in claim 1, there is provided an online game system in which a plurality of players conduct a game play by accessing through a network, including a private area control part controlling a game stage of a private area which restricts a number of players sharing a same game space; and a public area control part controlling a game stage of a public area which allows the number of players sharing the same game space greater than the private area, wherein a game is begun from a first game stage of the public area, the first game stage is transited to a second game stage of the private area, the second game stage is transited to a third game stage of the public area after the second game stage of the private area is cleared, and these transitions are repeated more than once.

Moreover, as claimed in claim 2, the online game system as claimed in claim 1 may further include a private area generation part dynamically generating control data of the private area control part.

Furthermore, as claimed in claim 3, in the online game system as claimed in claim 1 or 2, the public area control part may make a process transit to the game stage of the private area when a player comes into a game stage entrance of the private area provided at the game stage of the public area, and the private area control part may make the process transit to the game stage of the public area when the player enters a goal area provided at the game stage of the private area after the game stage of the private area is cleared.

Moreover, as claimed in claim 4, in the online game system as claimed in any one of claims 1 through 3, when another player attempts to join to a game stage in which the player exists, the public area control part and the private area control part may instruct a stage change to a client of the another player by sending data of a game program, send status data indicating a status of a current game stage to the client of the another player after the stage change is completed, and after that, distribute the client of the another player game stage status data indicating the status of the game stage after the stage change. Furthermore, as claimed in claim 5, there is provided an online game server which is accessed from terminals of a plurality of players through a network, including: a private area control part controlling a game stage of a private area which restricts a number of players sharing a same game space; and a public area control part controlling a game stage of a public area which allows the number of players sharing the same game space greater than the private area, wherein a game is begun from a first game stage of the public area, the first game stage is transited to a second game stage of the private area, the second game stage is transited to a third game stage of the public area after the second game stage of the private area is cleared, and these transitions are repeated more than once.

Moreover, as claimed in claim 6, there is provided a server control program of an online game system in which a plurality of players conduct a game play by accessing through a network, including: a private area control part controlling a game stage of a private area which restricts a number of players sharing a same game space; and a public area control part controlling a game stage of a public area which allows the number of players sharing the same game space greater than the private area, wherein a game is begun from a first game stage of the public area, the first game stage is transited to a second game stage of the private area, the second game stage is transited to a third game stage of the public area after the second game stage of the private area is cleared, and these transitions are repeated more than once.

Furthermore, as claimed in claim 7, there is provided a control method of an online game system in which a plurality of players conduct a game play by accessing through a network, including the steps of: controlling a game stage of a private area which restricts a number of players sharing a same game space; and controlling a game stage of a public area which allows the number of players sharing the same game space greater than the private area, wherein a game is begun from a first game stage of the public area, the first game stage is transited to a second game stage of the private area, the second game stage is transited to a third game stage of the public area after the second game stage of the private area is cleared, and these transitions are repeated more than once.

In the online game system according to the present invention, by aggressively mixing and utilizing two modes in which a limitation of the number of players is different: the public area by the MMO space and the private area by the MO space, a fully new communication field is generated in the game. In the communication field, it is possible to share various feelings and information with another player, regardless of my party and other parties. Thus, it is possible to direct a depth and achievement regarded as an adventure.

### BRIEF DESCRIPTION OF THE DRAWINGS

FIG. 1 is a diagram showing a transition of a stage in a conventional online game.
FIG. 2 is a diagram showing a configuration example of the online game system according to an embodiment of the present invention.
FIG. 3 is a diagram showing a functional configuration example of a game server group.
FIG. 4 is a diagram showing an example of a transition of a game stage.
FIG. 5 is a flowchart showing a process example of the transition of the game stage.
FIG. 6 is a diagram showing an overview of a game play within the game stage.
FIG. 7 is a sequence diagram showing a process example of a creation of the dungeon and entering and exiting (bursts) of another player.
FIG. 8 is a diagram showing an example of an entering and exiting process sequence.

### DESCRIPTION OF REFERENCE NUMERALS

- 1: client
- 2: network
- 3: patch server
- 4: front server group
- 5: game server group
- 51: public area control part
- 52: private area generation part
- 53: private area control part
- 6: my room server
- 7: database server
- 8: billing server

### BEST MODE FOR CARRYING OUT THE INVENTION

Preferred embodiments of the present invention are described below.

In an online game system according to an embodiment of the present invention, the entire game space is formed by a game stage of a public area and a game stage of a private area.

The game stage of the public area is of an MMO type which allows a large number of player to simultaneously play together but has a lower action nature, and the game stage of the private area is of an MO type which restricts to a small number of player to simultaneously play together but has a higher action nature.

A play field is an example of the game stage of the private area such as a dungeon, and is an area to carry out a mission charged to a game. Also, a lobby is an example of the game stage of the public area and is an area to search for a person such as an opponent, a cooperator, or a like to play the game together and to wait for the person.

The game stage is one scene (constitutional unit) of the game and is represented by a "stage", a "round", a "scene", or a like.

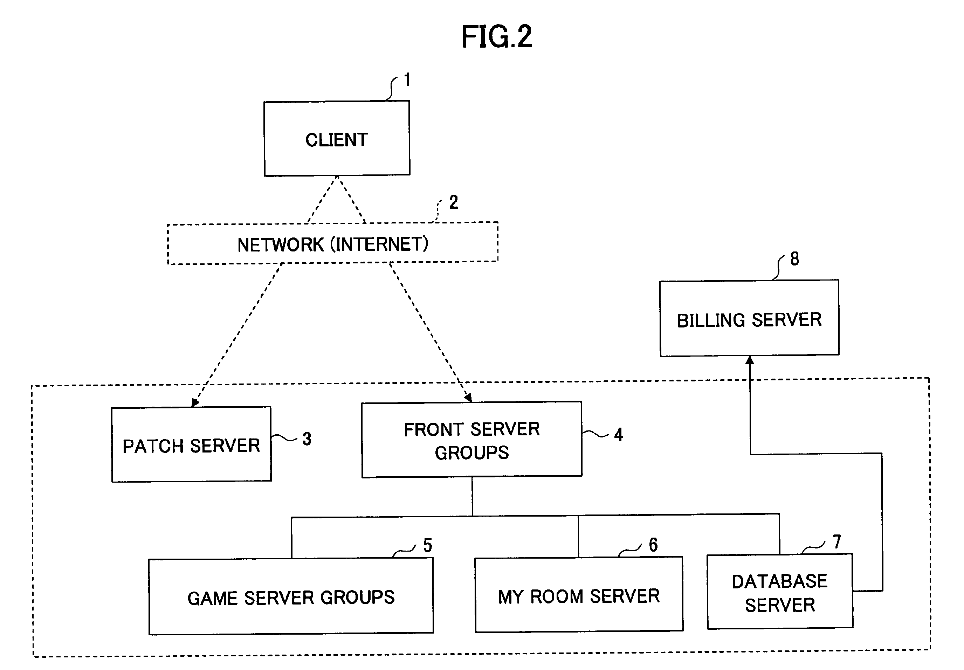

FIG. 2 is a diagram showing an example of a configuration of the online game system according to the embodiment of the present invention. In FIG. 2, the online game system includes a patch server 3 and a front server group 4 which are accessed from a client 1 such as a personal computer (PC) or a like through a network 2 such as an Internet or a like. The patch server 3 is accessed first from the client 1, and includes a function which applies a latest patch (revised program) onto a program of the client 1. Subsequently, the front server group 4 accessed by the client 1 includes a function which encrypts a communication to protect from an illegal access.

Moreover, at a later stage of the front server group 4, a game server group 5 for controlling a progress of the online game, a my room server 6 for providing a my room which can be customized uniquely by each player and can conduct communications such as an electronic mail, news, and a like, a database server 7 for managing account data and saving data, and a billing server 8 for conducting a billing and an authentication.

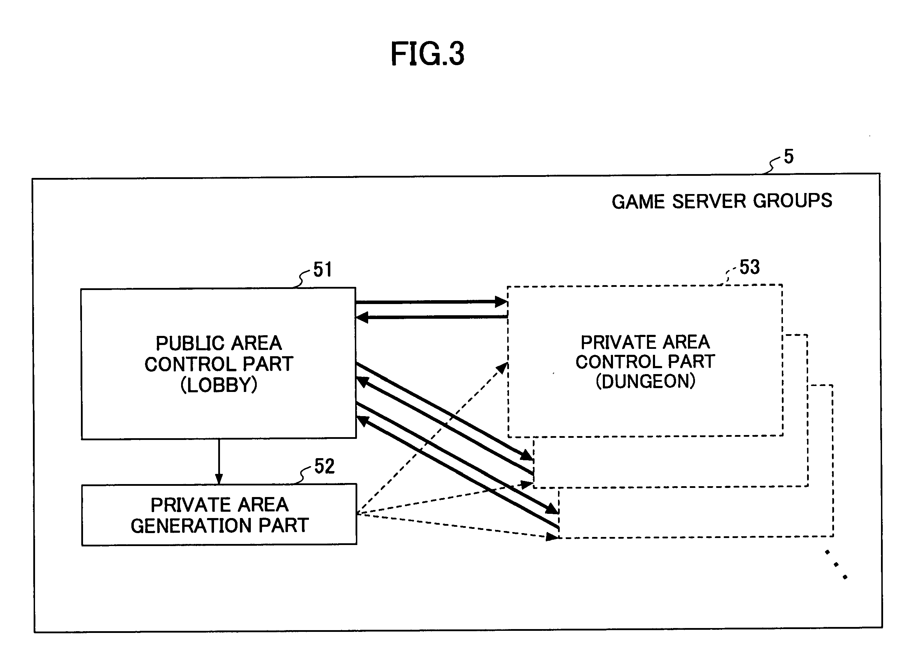

FIG. 3 is a diagram showing a functional configuration of the game server group 5. The game server group 5 includes a public area control part 51 for controlling the game stage of the public area including the lobby due to the MMO type which allows the larger number of players to simultaneously play together and is of the lower action nature, a private area control part 53 for controlling the game stage of the private area including the dungeon due to the MO type which restricts to the small number of players to simultaneously play together and is of the higher action nature, and a private area generation part 52 for dynamically generating control data (quest data) of the private area control part 53. In progress of the game, the game is started from the game stage of the public area controlled by the public area control part 51, transits from the game stage of the public area to the game stage of the private area, transits to the game stage of the public area after creating the game stage of the private area, and repeats these steps more than once.

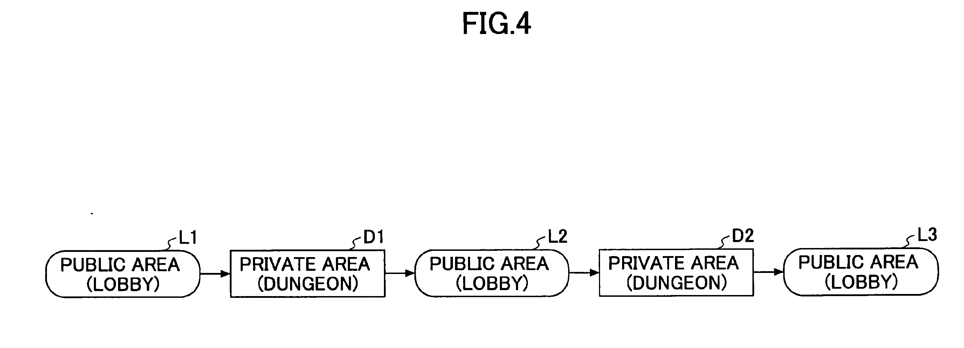

FIG. 4 is a diagram showing an example of a transition of the game stage. The game is begun from a game stage L1 of the public area being the MMO type including the lobby, the adventure (including a battle with enemy game characters) is preformed by the small number of parties in the game stage D1 of the private area which is the MO type including the dungeon, and the game stage D1 is transited to the game stage L2 of the public area which is the MMO type including the lobby after the game is carried out. The game stage L2 of the public area is different from the game stage L1 of the public area which is an initial stage. There are other parties who have cleared the game stage D1 of the private area, in the game stage L2 of the public area.

In the game stage L2 of the public area, the player communicates with players other than his party and changes members of his party if necessary, and again starts the adventure with the party of the small number of players in a game stage D2 of the private area which is the MO type including the dungeon. The game stage D2 is further transited to a game stage L3 of another public area which is the MMO type including the lobby after the player clears the game. It should be noted that it is not limited to a count of repeating the public area and the private area as shown in FIG. 4.

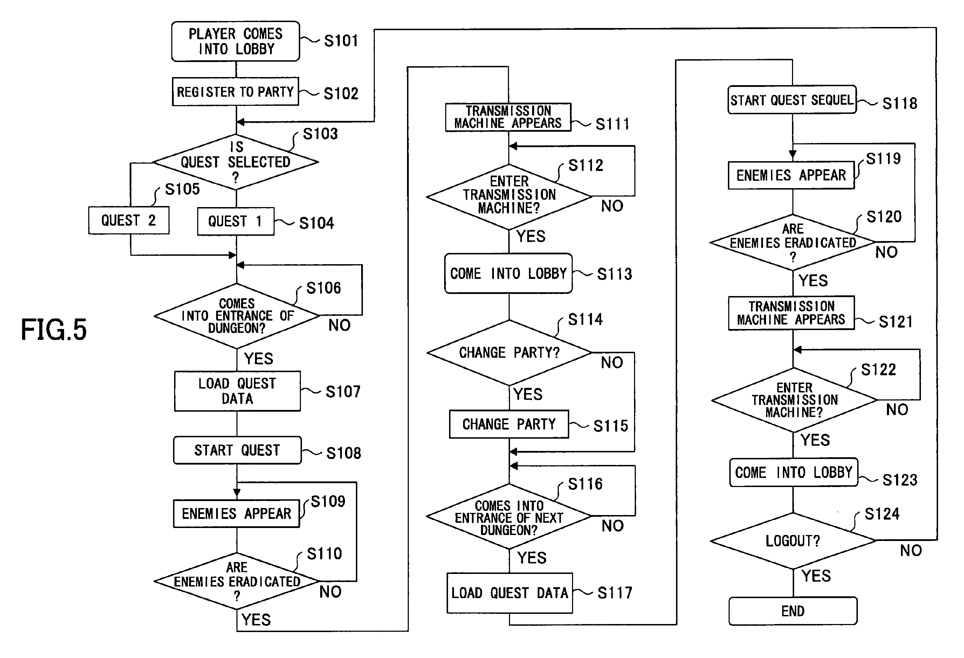

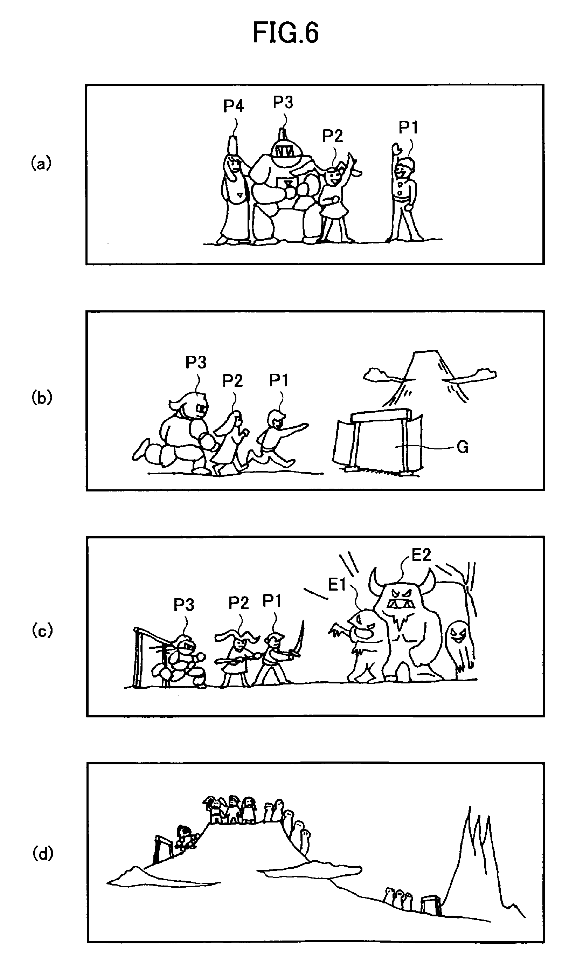

FIG. 5 is a flowchart showing a process example of the transition of the game stage. In FIG. 5, the player enters the lobby of the public area (step S101), and registers to a party experiencing the adventure together (step S102). FIG. 6A shows an example of a display image in a state in that other players P2 through P4 agree to a player P1 being a leader and make up a party.

Returning to FIG. 5, the player selects a quest (task in the adventure) (steps S103 through S105). For example, when the player comes into an entrance of a dungeon by selecting a quest 1 (YES of step S106), the game stage is transited to the private area. It should be noted that it is not required to create a room like a conventional method, and the player is smoothly let to enter a closed dungeon. FIG. 6B is an example of a display image of a state in that the players P1 through P3 come into an entrance G of the dungeon.

Returning to FIG. 5, when the player comes in the entrance of the dungeon, the quest data are downloaded (step S107), and the quest starts (step S108). Enemies (enemy game characters) appear in the dungeon (step S109), and members of the party sharing the adventure fight by cooperating with each other. FIG. 6C shows an example of a display image of a state in which the players P1 through P3 fight with enemies E1 and E2.

Returning to FIG. 5, when the enemies are eradicated (YES of step S110), a transmission machine appears (step S111). The transmission machine is a goal area set as a goal beforehand within the quest data. When the players enter the transmission machine (YES of step S112), the players come out to the lobby of the public area (step S113). FIG. 6D shows an example of a display image of a state in that the players have come out to the lobby. It is assumed that the lobby is provided on a mountaintop. In this lobby, each player can communicate with players of other parties who arrive reach at last in the same lobby as well as players of a party of a proximate dungeon, by using a text chat, a voice chat, a video chat, or a like.

Returning to FIG. 5, the players in the party are changed in the lobby if necessary (steps S114 and S115), and the players come into the entrance of a next dungeon (YES of step S116). When the players come into the entrance of the dungeon, the quest data are downloaded (step S117), and a sequel of the quest starts (step S118). Enemies appear in the dungeon (step S119). When the players of the party sharing the adventure fight with the enemies by cooperating with each other and the enemies are eradicated (YES of step S120), the transmission machine appears (step S121). The players enter the transmission machine (YES of step S122), and get out to the lobby of the public area (step S123). The game is terminated by logging out (YES of step S124). If the players do not log out, the players go back to select the quest again (step S103).

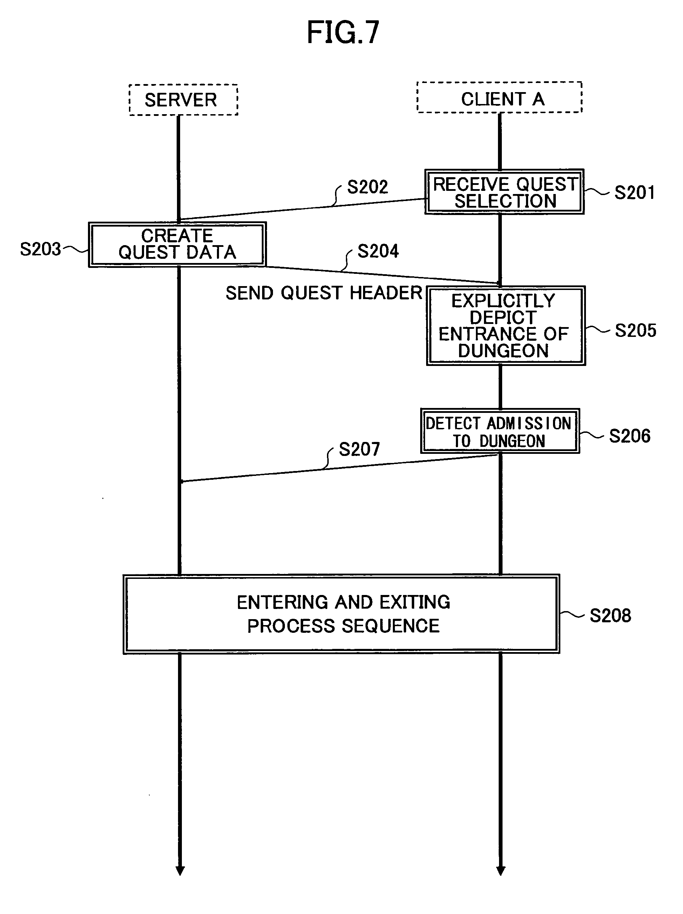

Next, FIG. 7 is a sequence diagram showing a process example of a creation of the dungeon and entering and exiting (bursts) of another player. In FIG. 7, when a client A of a player receives a quest selection (step S201), this state is informed to a server (step S202), and the server generates the quest data (step S203). The server sends a quest header corresponding to the entrance of the dungeon to the client A (step S204), and the client A explicitly displays the entrance of the dungeon (step S205). Then, when the client A detects that the player comes into the entrance of the dungeon (step S206), this state is informed to the server (step S207). After that, a conventional process sequence is proceeded (step S208).

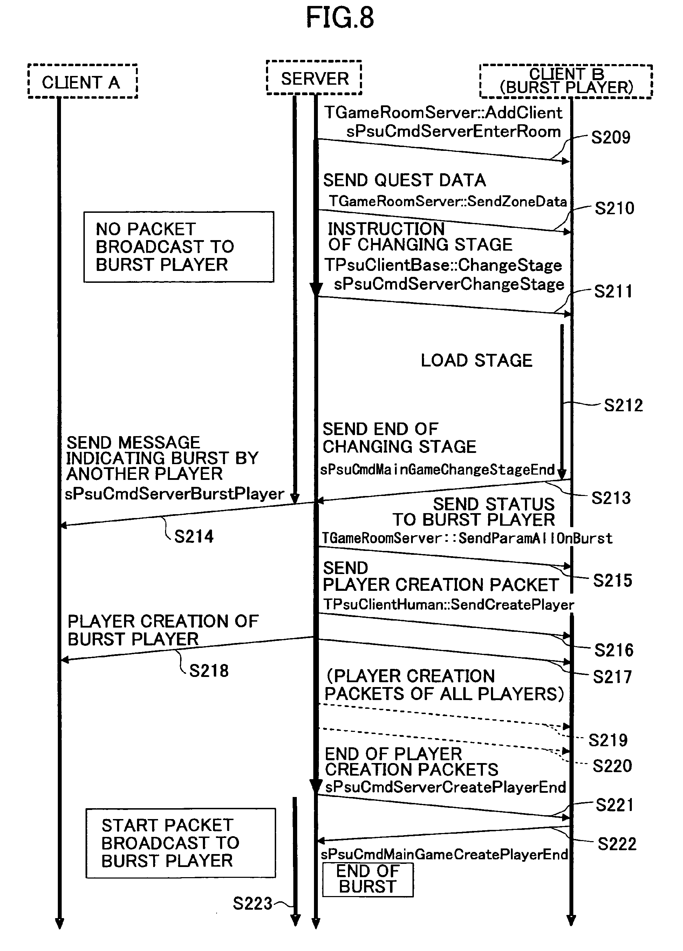

FIG. 8 is a diagram showing an example of the entering and exiting process sequence. It is assumed that the player of the client A has already entered the dungeon and a player of a client B bursts (joins) into the dungeon. In FIG. 8, although packet data indicating a status of the game stage have been distributed (broadcasted) to the player of the client A who has already entered the dungeon, the packet data have not yet been distributed to the player of the client B who attempts to newly burst into the dungeon at this point.

With respect to the player of the client B who newly attempts to burst into, the server successively sends a notice indicating an addition of a client (AddClient) and of entering a room (EnterRoom) (step S209), sends the quest data (step S210), and sends a stage change instruction for changing from a current game stage of the player at a side of bursting into the game stage of the player at a side of being burst into (step S211). During these processes, a game execution time is considered as zero at a side of the server.

The client B receives data and loads a stage (step S212), and informs an end of changing the stage to the server when ending loading the stage (step S213). The server receives the end of changing the stage and informs a burst in of another player to the client A (step S214).

After that, the server sends a status to the client B (step S215), and sends a player generation packet (steps S216 and S217). In addition, the server generates a player being an intruder with respect to the client A (step S218). Moreover, the server sends the player generation packets of all players in the game stage to the client B steps S219 and S220), and informs an end of the player generation packets when completing sending the player generation packets of all players (step S221). The client B generates the players from the received packets, and informs the server a completion of the generation (step S222). Then, the burst is completed. After that, packet data indicating a status of the game stage is begun to distribute to the client B of the intruder in addition to the client A who has already entered the dungeon (step S223).

As described above, according to the present invention, it is possible to impress to the player a feeling of adventure such that the player enters the dungeon being closed from the lobby being the public area and exits to the lobby being opened again from the dungeon. Accordingly, it is possible to direct a feeling of "proceeding all together" for players of other parties, who encounter at each lobby, as well as other players in the same party, and it is possible to share feelings of accomplishment and achievement due to clearing a last dungeon. Moreover, it is possible to exchange information such as an impression, a conquer method, and a like concerning the last and future adventures at each lobby at halfway of the adventure. Furthermore, since the players conduct an exchange of items acquired or a like, it is possible to increase interest factors.

In the above-described embodiment, the network is not limited to a wired network and may be a wireless network. In addition, a terminal of the player may be a PC, a game console, an arcade game machine, a PDA (Personal Digital Assistant), a mobile phone, and a like.

Moreover, the private area is not limited to the dungeon (subject structuring a labyrinth), and may be a virtual forest, plain, wild land, or like, or a virtual area in the game which intends to hunt for treasure or play a charade such that the enemy game characters do not appear.

The present invention is described above in terms of preferred embodiments. Although the present invention is described above with reference to specific embodiments, it will be apparent that changes and modifications can be made without departing from the spirit and scope of the present invention as set forth in the appended claims. The present invention is not limited to the description of the specific embodiments and the attached drawings.

## Claims

1. An online game system in which a plurality of players conduct a game play by accessing through a network, comprising:
a private area control part controlling a game stage of a private area which restricts a number of players sharing a same game space; and
a public area control part controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

2. The online game system as claimed in claim 1, further comprising a private area generation part dynamically generating the private area control part.

3. The online game system as claimed in claim 1 or 2, wherein:
the public area control part makes a process transit to the game stage of the private area when a player comes into a game stage entrance of the private area provided at the game stage of the public area; and
the private area control part makes the process transit to the game stage of the public area when the player enters a goal area provided at the game stage of the private area after the game stage of the private area is cleared.

4. The online game system as claimed in any one of claims 1 through 3,
wherein when another player attempts to join to a game stage in which the player exists, the public area control part and the private area control part instruct a stage change to a client of the another player by sending data of a game program, sends status data indicating a status of a current game stage to the client of the another player after the stage change is completed, and after that, distributes the client of the another player game stage status data indicating the status of the game stage after the stage change.

5. An online game server which is accessed from terminals of a plurality of players through a network, comprising:
a private area control part controlling a game stage of a private area which restricts a number of players sharing a same game space; and
a public area control part controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

6. A server control program of an online game system in which a plurality of players conduct a game play by accessing through a network, comprising:
a private area control part controlling a game stage of a private area which restricts a number of players sharing a same game space; and
a public area control part controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

7. A control method of an online game system in which a plurality of players conduct a game play by accessing through a network, comprising the steps of:
controlling a game stage of a private area which restricts a number of players sharing a same game space; and
controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

## Amended claims

### Amended claims under Art. 19.1 PCT

1. (Original) An online game system in which a plurality of players conduct a game play by accessing through a network, comprising:
a private area control part controlling a game stage of a private area which restricts a number of players sharing a same game space; and
a public area control part controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

2. (Amended) The online game system as claimed in claim 1, further comprising a private area generation part dynamically generating control data of the private area control part.

3. (Original) The online game system as claimed in claim 1 or 2, wherein:
the public area control part makes a process transit to the game stage of the private area when a player comes into a game stage entrance of the private area provided at the game stage of the public area; and
the private area control part makes the process transit to the game stage of the public area when the player enters a goal area provided at the game stage of the private area after the game stage of the private area is cleared.

4. (Original) The online game system as claimed in any one of claims 1 through 3,
wherein when another player attempts to join to a game stage in which the player exists, the public area control part and the private area control part instruct a stage change to a client of the another player by sending data of a game program, sends status data indicating a status of a current game stage to the client of the another player after the stage change is completed, and after that, distributes the client of the another player game stage status data indicating the status of the game stage after the stage change.

5. (Original) An online game server which is accessed from terminals of a plurality of players through a network, comprising:
a private area control part controlling a game stage of a private area which restricts a number of players sharing a same game space; and
a public area control part controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

6. (Original) A server control program of an online game system in which a plurality of players conduct a game play by accessing through a network, comprising:
a private area control part controlling a game stage of a private area which restricts a number of players sharing a same game space; and
a public area control part controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

7. (Original) A control method of an online game system in which a plurality of players conduct a game play by accessing through a network, comprising the steps of:
controlling a game stage of a private area which restricts a number of players sharing a same game space; and
controlling a game stage of a public area which allows the number of players sharing the same game space greater than the private area,
wherein a game is begun from a first game stage of the public area, the first game stage is transited to a second game stage of the private area, the second game stage is transited to a third game stage of the public area after the second game stage of the private area is cleared, and these transitions are repeated more than once.

Statement under Art. 19.1 PCT
With respect to International Application No. PCT/JP2006/318113, filed September 14, 2006, the applicant submitted on January 9, 2007 the Amendment of Claims Under PCT Article 19(1) in which the applicant canceled the originally filed Claim 2 on the sheets 17 of the Description, and substituted therefor the amended Claim 2 on the substitute sheets 17 which are attached hereto. The originally filed Claims 1, and 3 to 7 on the sheets 17-20 of the Description remain unchanged.
